# EUROPÄISCHE PATENTSCHRIFT

(11) **EP 2 232 909 B1**
(45) Veröffentlichungstag und Bekanntmachung des Hinweises auf die Patenterteilung: **14.12.2011**
(21) Anmeldenummer: 08854123.0
(22) Anmeldetag: 13.10.2008
(51) Int. Cl.: H04W 52/02

(54) **VERFAHREN ZUR REDUZIERUNG DES STROMVERBRAUCHS IN EINEM MOBILFUNKNETZ MIT MINDESTENS ZWEI VERSORGUNGSEBENEN**
METHOD FOR REDUCING ENERGY USE IN A MOBILE COMMUNICATIONS NETWORK HAVING AT LEAST TWO OPERATIONAL LEVELS
PROCÉDÉ DE RÉDUCTION DE LA CONSOMMATION DE COURANT DANS UN RÉSEAU DE TÉLÉPHONIE MOBILE COMPRENANT AU MOINS DEUX NIVEAUX OPÉRATIONELS

(30) Priorität: 28.11.2007 DE 102007057607
(43) Veröffentlichungstag der Anmeldung: 29.09.2010
(73) Patentinhaber: Deutsche Telekom AG, 53113 Bonn (DE)
(72) Erfinder: SCHMITT, Harald, 56170 Bendorf (DE)
(86) Internationale Anmeldenummer: PCT/EP2008/008645
(87) Internationale Veröffentlichungsnummer: WO 2009/068138

(56) Entgegenhaltungen:
- WO-A-00/07384
- DE-A1- 10 035 116
- GB-A- 2 316 578
- ANONYMOUS: "Method to increase power efficiency in a mixed GSM/UMTS network" RESEARCH DISCLOSURE, MASON PUBLICATIONS, HAMPSHIRE, GB, Bd. 471, Nr. 88, 1. Juli 2003 (2003-07-01), XP007133045 ISSN: 0374-4353
- PERSSON H ET AL: "Maintaining QoS by utilizing hierarchical wireless systems" COMMUNICATIONS, 2003. APCC 2003. THE 9TH ASIA-PACIFIC CONFERENCE ON 21-24 SEPT. 2003, PISCATAWAY, NJ, USA,IEEE, Bd. 1, 21. September 2003 (2003-09-21), Seiten 292-296, XP010688191 ISBN: 978-0-7803-8114-8

## Beschreibung

Die Erfindung betrifft ein Verfahren zum Betrieb eines Mobilfunknetzes, welches zwei oder mehr Versorgungsebenen aufweist, wobei die Versorgungsebenen sich überlagern und jeweils durch eine Mehrzahl von Sendestationen gebildet sind.

Heutige Mobilfunknetze sind sehr häufig in verschiedene Versorgungsebenen aufgeteilt. Dabei können die verschiedenen Ebenen gleiche Technologien verwenden, z.B. Microzellennetze bei denen eine Ebene die Marcozellenebene bildet und eine weitere Versorgungsebene die Microzellenebene bildet. Unterschiedliche Versorgungsebenen können aber auch unterschiedliche Technologien verwenden, wie z.B. bei Dualmodenetzen wobei GSM eine Versorgungsebene und UMTS eine zweite Versorgungsebene bildet. Eine Kombination von Versorgungsebenen gleicher und unterschiedlicher Technologien ist ebenfalls möglich.

Das heißt, dass die Versorgungsebenen jeweils durch eine Mehrzahl von einzelnen Sendestationen gebildet sind, wodurch eine flächendeckende Bereitstellung der Dienste des Mobilfunknetzes gewährleistet wird, wobei sich die Versorgungsebenen in ihrer räumlichen Abdeckung überlagern.

Heutige Sendestationen sind in der Lage in Zeiten geringen Gesprächs- und Lastaufkommen überflüssige Kapazitäten stromlos zu schalten. Bei GSM Sendestationen werden zum Beispiel einzelne Hochfrequenzträger deaktiviert. Bei UMTS Netzen besteht ebenfalls die Möglichkeit, einzelne Hochfrequenzverstärker zu deaktivieren. Zusätzlich kann bei UMTS Sendestationen Verarbeitungskapazität des Basebands deaktiviert werden.

Nachteilig bei den bekannten Verfahren ist, dass die Abschaltaktionen immer innerhalb einer Sendestation durchgeführt werden. Weiterhin ist nachteilig, dass lediglich Teile der Kapazität deaktiviert werden und die grundsätzliche Versorgung der Sendestation nicht beeinträchtigt wird, um eine flächendeckende Versorgung mit dem entsprechenden Dienst zu gewährleisten.

Das Dokument "Method to increase power efficiency in a mixed GSM/UMTS network", RESEARCH DISCLOSURE, MASON PUBLICATIONS, HAMPSHIRE, GB, Bd. 471, Nr. 88, ISSN 0374-4353, 1. Juli 2003, beschreibt ein Mobilfunknetz, das zwei oder mehr sich überlagernde Versorgungsebenen mit jeweils mehreren Sendestationen aufweist. Eine erste Versorgungsebene (GSM) ist als Standardebene zur Gewährleistung der Verfügbarkeit des Mobilfunknetzes vorgesehen, und eine zweite Versorgungsebene (UMTS) stellt einen anderen Dienst einer anderen Technologie bereit. Die zweite Versorgungsebene wird zumindest teilweise und/oder temporär abgeschaltet, wenn der in dieser Ebene bereitgestellte Dienst von Endgeräten nicht verlangt wird oder länger nicht verlangt wurde. Die zweite Versorgungsebene wird entweder periodisch reaktiviert damit sich ein nur-UMTS Endgerät beim Eintritt in den Versorgungsbereich bei der zweiten Versorgungsebene registrieren kann, oder der RNC sendet einen Reaktivierungsbefehl an die zweite Versorgungsebene wenn sich ein UMTS/GSM Endgerät bereits in der ersten (GSM) Versorgungsebene registriert hat und einen UMTS Dienst anfordert. Damit kann die Dauer der Reaktivierung relativ lang sein.

Die GB 2 316 578 A offenbart ein Mobilfunknetz mit mehreren Versorgungsebenen, die aus Makro-, Mikro- bzw. Picozellen bestehen. Falls die Last in den Makrozellen über einem Schwellwert liegt und die Kapazität der Makrozellen erschöpft ist, dann werden Mikrozellen aktiviert um die Kapazität des Mobilfunknetzes zu erhöhen.

Die Aufgabe der Erfindung ist es, ein Verfahren zur Verfügung zu stellen, durch das es ermöglicht wird, den Stromverbrauch in einem Mobilfunknetz in Zeiten geringen Gesprächs- und Lastaufkommens zu reduzieren und damit die Gesamtbetriebskosten zu reduzieren, wobei gleichzeitig die grundsätzliche und ständige Verfügbarkeit der angebotenen Dienste gewährleistet sein soll. Inbesondere soll in einem Mobilfunknetz mit zwei oder mehr Versorgungsebenen die Reaktivierung von Sendestationen nach ihrer Abschaltung sinnvoll gestaltet werden.

Diese Aufgabe wird erfindungsgemäß durch ein Verfahren gemäß Anspruch 1 gelöst.

Besonders vorteilhaft ist dabei, dass bei dem Verfahren zum Betrieb eines Mobilfunknetzes, welches zwei oder mehr Versorgungsebenen aufweist, wobei die Versorgungsebenen sich überlagern und jeweils durch eine Mehrzahl von Sendestationen gebildet sind, eine erste Versorgungsebene als Standardebene definiert ist, die die Verfügbarkeit des Mobilfunknetzes gewährleistet, und dass eine zweite Versorgungsebene zumindest teilweise und/oder temporär abgeschaltet wird.

Durch das erfindungsgemäße Verfahren werden somit ganze Sendestationen oder ganze Ebenen deaktiviert und bei Bedarf reaktiviert. Lediglich eine Kontrolleinheit innerhalb oder auch außerhalb der Sendestation verbleibt aktiv um die Sendestation wieder aktivieren zu können. Da die gesamte Sendestation oder Versorgungsebene deaktiviert wird, wird auch die Versorgung der Sendestation eingestellt. Hierdurch wird der Stromverbrauch deutlich reduziert, da nicht nur eine teilweise Abschaltung, sondern eine vollständige Abschaltung einzelner Sendestationen oder einer Versorgungsebene erfolgt. Die grundsätzliche Verfügbarkeit wird dabei stets durch die ständig in Betrieb gehaltene Standardebene gewährleistet.

Einzelne Sendestationen in einem Netz mit mehreren Ebenen können bei niedriger oder keiner Last abgeschaltet werden. Damit das Abschalten einzelner Sendestationen nicht das Versorgungsgebiet und die generelle Netzverfügbarkeit des Mobilfunknetzes einschränkt, ist es notwendig eine Defaultebene zu definieren in der keine Sendestationen abgeschaltet werden. Diese Defaultebene garantiert die Versorgung und generelle Netzverfügbarkeit.

Weitere vorteilhafte Ausgestaltungen der Erfindung sind in den Unteransprüchen angegeben.

Vorzugsweise erfolgen eine Überwachung der Last in dem Mobilfunknetz und eine Abschaltung der zweiten Versorgungsebene oder einzelner Sendestationen der zweiten Versorgungsebene bei Unterschreitung einer festlegbaren Lastuntergrenze.

Die zweite Versorgungsebene kann dabei dieselben Dienste bereitstellen, wie die Standardebene, insbesondere derselben Technologie angehören, wie die Standardebene. Es ist auch möglich, dass dass die zweite oder eine weitere Versorgungsebene einen anderen Dienst bereitstellt, als die Standardebene, insbesondere einer anderen Technologie angehört, als die Standardebene, und dass eine Abschaltung dieser zweiten oder weiteren Versorgungsebene erfolgt, wenn der von dieser Ebene bereitgestellte Dienst derzeit nicht verlangt wird oder über eine festlegbare Zeitspanne nicht verlangt wurde.

Die Bedingungen zum Reaktivieren von Sendestationen unterscheiden sich entsprechend der folgenden Anwendungsfälle. Bei abgeschalteten Sendestationen, welche einer anderen Technologie angehören als die Defaultebene, d.h. die Standardebene, kann es sinnvoll sein diese Sendestationen bereits zu reaktivieren für den Fall dass mindestens ein Endgerät, welches diese Technologie unterstützt, im Versorgungsbereich aktiv wird. Dies ist insbesondere dann der Fall, wenn die abgeschaltete Sendestation eine Technologie unterstützt, welche Funktionen oder Services unterstützt die von der aktuellen Sendestation in der Defaultebene nicht unterstützt wird.

Sendestationen der gleichen Technologie sind zu reaktivieren, wenn eine Lastgrenze in der aktuellen Sendestation überschritten wird. Somit ergibt sich ein Netz mit verschiedenen Serviceebenen. In der Defaultebene werden generell keine Sendestationen abgeschaltet. Die abschaltbare Lastebene enthält Sendestationen der gleichen Technologie wie die Defaultebene. Das Kriterium zum Abschalten von Sendestationen in diesem Layer ist niedriges Gesprächsaufkommen in der Default- und Lastebene. Die Triggerbedingung zum Reaktivieren von Sendestationen in der Lastebene ist erhöhtes Gesprächsaufkommen in der Defaultebene, d.h. in der ersten Versorgungsebene, der Standardebene. Die abschaltbare Serviceebene, d.h. die zweite oder weitere Versorgungsebene, enthält Sendestationen unterschiedlicher Technologie im Vergleich zur Defaultebene und unterstützt unterschiedliche Services und Funktionen. Die Bedingung zum Abschalten von Sendestationen in dieser Ebene ist Inaktivität über eine gewisse Zeit oder die Feststellung, dass der von dieser Ebene angebotene Dienst derzeit nicht verlangt wird. Die Bedingung zum Reaktivieren einer Sendestation in dieser Ebene ist Aktivität eines Endgerätes, welches die Technologie der abschaltbaren Serviceebene unterstützt, in der Default- oder Lastebene im Versorgungsbereich der einzuschaltenden Sendestation.

Bevorzugt erfolgt eine Lastüberwachung einer jeden Sendestation, insbesondere kann eine temporäre Abschaltung einzelner Sendestationen erfolgen.

Vorzugsweise wird eine Abschaltung einer Sendestation durch eine stetige Absenkung der Ausgangssendeleistung bis zu Null durchgeführt, und nicht durch ein schlagartiges Abschalten der Sendestation.

Eine Problematik der Abschaltung einzelner Sendestation ist, dass alle Endgeräte welche auf der abzuschaltenden Sendestation eingebucht sind, zum gleichen Zeitpunkt eine andere verfügbare Sendestation suchen und sich dort einbuchen. Dies erzeugt möglicherweise eine plötzliche Signalisierungslast. Zur Vermeidung dieser Signalisierungsspitzen wird vorgeschlagen, die Sendestationen nicht zu einem definierten Zeitpunkt abzuschalten, sondern die Ausgangsleistung der Sendestation langsam bis zu Null zu reduzieren, d.h. nicht schlagartig sondern stetig abzusenken. Dadurch wechseln nicht alle Endgeräte zum gleichen Zeitpunkt die Sendestation. Endgeräte welche weiter entfernt sind von der Sendestation wechseln früher als Endgeräte deren Aufenthaltsort nahe der Sendestation ist.

Die erste Versorgungsebene kann durch GSM-Sendestationen gebildet sein. Ebenfalls können die zweite und/oder eine weitere Versorgungsebene durch GSM-Sendestationen gebildet sein. Alternativ oder kumulativ können eine zweite und/oder eine weitere Versorgungsebene durch UMTS-Sendestationen gebildet sein. Hierdurch können verschiedenste Dienste bereitgestellt werden bzw. es können durch räumliche Überlagerung mit identischen Sendestationen und Technologien Lastspitzen in dem Mobilfunknetz abgefangen werden.

Bevorzugt wird der Schaltzustand von Sendestationen der zweiten und/oder einer weiteren Versorgungsebene oder von einzelnen Sendestationen der zweiten und/oder einer weiteren Versorgungsebene von einer Kontrolleinheit überwacht, insbesondere kann die Standardebene derartige Kontrolleinheiten aufweist.

Eine Einschaltung von Sendestationen einer zweiten und/oder einer weiteren Versorgungsebene des Mobilfunknetzes kann bei Überschreitung eines festlegbaren Lastaufkommens und/oder bei Abruf von besonderen durch diese Sendestationen angebotenen Diensten in dem Mobilfunknetz erfolgen.

In einer bevorzugten Ausführungsform wird mittels eines Protokolls der aktuelle Schaltzustand einer Sendestation an eine Kontrolleinheit übermittelt, wenn eine Anfrage und/oder Schaltanweisung einer Kontrolleinheit empfangen wurde und/oder wenn der Schaltzustand der Sendestation nach Erhalt einer Schaltanweisung geändert wurde.

Zur Reaktivierung von einzelnen Sendestationen in der Last- oder Serviceebene ist es notwendig, die betroffenen Sendestationen darüber zu informieren, dass ein Kriterium zur Wiedereinschaltung in der Defaultebene bzw. in der Lastebene erreicht ist. Dabei ist zu Beachten dass das Kriterium zur Einschaltung einer Sendestation in der Lastebene nur in der Defaultebene eintreten kann. Das Kriterium zur Einschaltung einer Sendestation in der Serviceebene kann in der Default- und Lastebene eintreten. Weiterhin ist es notwendig, dass die Sendestationen in der Defaultebene den Einschaltzustand der Sendestationen in der Service- und Lastebene verwalten. Sendestationen der Lastebene müssen den Einschaltzustand von Sendestationen der Serviceebene verwalten. Dies ist notwendig damit diese Sendestationen bei Erreichen eines Einschalttriggers, d.h. bei Eintritt der Einschaltbedingung, entsprechende Kommandos an die einzuschaltende Sendestationen generieren. Dabei ist zu beachten, dass lediglich die Zustände von Sendestationen zu verwalten sind, welche den gleichen Versorgungsbereich haben. Ein Protokoll zwischen den Sendestation ist nützlich, um Änderungen des Einschaltzustandes den entsprechenden Sendestationen oder Kontrolleinheiten mitzuteilen. Weiterhin unterstützt das Protokoll ein Kommando zur Einschaltung der Sendestation für den Fall, dass die entsprechende Triggerbedingung (Einschaltbedingung) erreicht ist. Weiterhin soll das Protokoll Kommandos unterstützen, um den Einschaltstatus einzelner Sendestationen (NodeB) abzufragen. Vorzugsweise unterstützt das Protokoll folgende Kommunikationen und Kommandos:
Abfrage des Einschaltzustandes:
   POWER STATUS REQUEST erfragt den Einschaltzustand einer Sendestation.
   POWER STATUS RESPONSE enthält den aktuellen Einschaltzustand einer Sendestation.
Informationsaustausch über die Abschaltung einer Sendestation:
   POWER SWITCHOFF gibt an, dass die Triggerbedingung zum Abschalten einer Sendestation erreicht ist und die Sendestation abschaltet.
   POWER SWITCHOFF ACK bestätigt den Empfang einer POWER SWITCHOFF Nachricht.
Abfrage des Einschaltzustandes bei einem Einschaltkommando:
   POWER SWITCHON REQUEST erfordert die Reaktivierung einer Sendestation.
   POWER SWITCHON ACK enthält die Angabe, dass eine Sendestation erfolgreich eingeschaltet wurde.

Das Verfahren ist in den Figuren dargestellt und wird nachfolgend erläutert. Es zeigen:
- Fig. 1: Eine schematische Darstellung des Aufbaus eines Mobilfunknetzes mit mehreren Versorgungsebenen;
- Fig. 2: eine Darstellung der Kommunikation zwischen zwei Sensdestationen.

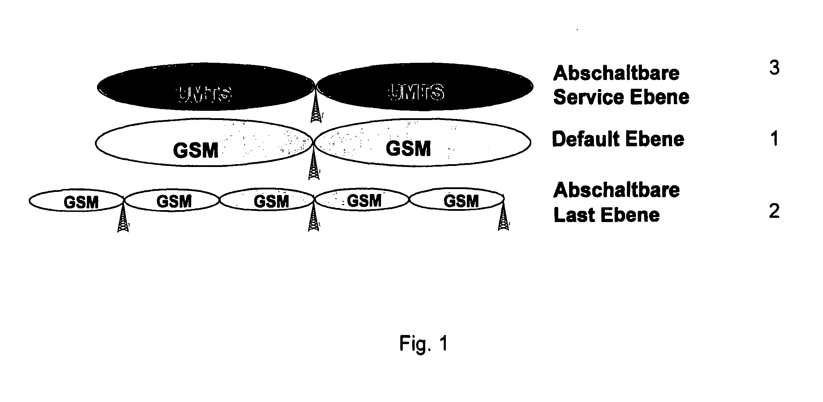

In Fig. 1 ist eine schematische Darstellung des Aufbaus eines Mobilfunknetzes mit mehreren Versorgungsebenen 1, 2, 3 wiedergegeben.

Das Mobilfunknetz ist gebildet durch mehrere Ebenen 1, 2, 3, wobei eine erste Versorgungsebene, die Default Ebene 1 als Standardebene 1 definiert, die die stetige Verfügbarkeit der Mobilfunkdienste gewährleistet und daher stets in Betrieb gehalten wird. Daneben zeigt Fig. 1 eine zweite Versorgungsebene 2, nämlich die zusätzliche Lastebene 2, die auf derselben Technologie basiert, wie die Standardebene 1, im dargestellten Beispiel GSM. Weiter weist das Mobilfunknetz eine weitere Versorgungsebene 3 in Form einer abschaltbaren Service Ebene 3 auf, die einen anderen Dienst bereitstellt, als die Standardebene 1 und beispielhaft als UMTS-Netz dargestellt ist.

Die Versorgungsebenen 1, 2, 3 sind jeweils durch eine Vielzahl einzelner Basisstationen (NodeB) gebildet, um eine möglichst flächendeckende Versorgung zu gewährleisten, wobei sich die Ebenen 1, 2, 3 räumlich überlagern, d.h. dass die Funkreichweiten der Basisstationen der verschiedenen Ebenen 1, 2, 3 sich zumindest teilweise decken. Durch die räumliche (geografische) Überdeckung von Standardebene 1 und Lastebene 2 können auftretende Lastspitzen abgefangen werden, durch die räumliche (geografische) Überdeckung von Standardebene 1 und Serviceebene 3 können verschiedene Dienste, hier GSM- und UMTS-Verbindungen, in demselben Gebiet angeboten werden.

Gemäß Fig. 1 können die Ebenen gleiche Technologien verwenden, z.B. Microzellennetzjbei denen eine erste Ebene 1 die Marcozellenebene bildet und eine weitere Versorgungsebene 2 die Microzellenebene bildet. Unterschiedliche Versorgungsebenen können aber auch unterschiedliche Technologien verwenden wie z.B. bei Dualmodenetzen wobei GSM eine Versorgungsebene 1 und UMTS eine zweite bzw. weitere Versorgungsebene 3 bildet. Bei dem in Fig. 1 dargestellten Schema ist eine Kombination von Versorgungsebenen gleicher (Ebenen 1, 2) und unterschiedlicher Technologie (Ebene 3) abgebildet, die ebenfalls möglich ist.

Einzelne Sendestationen in dem Netz mit mehreren Ebenen 1, 2, 3 können bei niedriger oder keiner Last abgeschaltet werden. Damit das Abschalten einzelner Sendestationen nicht das Versorgungsgebiet und die generelle Netzverfügbarkeit des Mobilfunknetzes einschränkt, ist es notwendig eine Defaultebene 1 zu definieren, in der keine Sendestationen abgeschaltet werden. Diese Defaultebene 1, d.h. die Standardebene 1, garantiert die Versorgung und generelle Netzverfügbarkeit.

Die Bedingungen zum Reaktivieren von Sendestationen unterscheiden sich entsprechend der folgenden Anwendungsfälle. Bei abgeschalteten Sendestationen, welche einer anderen Technologie (Ebene 3) angehören als die Defaultebene 1, kann es sinnvoll sein diese Sendestationen bereits zu reaktivieren für den Fall, dass mindestens ein Endgerät, d.h. ein Mobilfunkendgerät, welches diese Technologie unterstützt im Versorgungsbereich aktiv wird. Dies ist dann der Fall, wenn die abgeschaltete Sendestation eine Technologie unterstützt, welche Funktionen, Dienste oder Services unterstützt, die von der aktuellen Sendestation in der Defaultebene 1 nicht unterstützt wird.

Sendestationen der gleichen Technologie (Ebene 2) sind zu reaktivieren, wenn eine Lastgrenze in der aktuellen Sendestation überschritten wird. Somit ergibt sich ein Netz mit verschiedenen Serviceebenen 1, 2, 3. In der Defaultebene 1 werden generell keine Sendestationen abgeschaltet. Die abschaltbare Lastebene 2 enthält Sendestationen der gleichen Technologie wie die Defaultebene1. Das Kriterium zum Abschalten von Sendestationen in diesem Layer (Lastebene 2) ist niedriges Gesprächsauflcommen in der Defaultebene 1 und Lastebene 2. Die Triggerbedingung, d.h. die Einschaltbedingung zum Reaktivieren von Sendestationen in der Lastebene 2 ist erhöhtes Gesprächsaufkommen in der Defaultebene 1.

Die abschaltbare Serviceebene 3 enthält Sendestationen unterschiedlicher Technologie im Vergleich zur Defaultebene 1 und unterstützt unterschiedliche Services, Dienste und Funktionen. Die Bedingung zum Abschalten von Sendestationen in dieser Ebene 3 ist Inaktivität über eine gewisse Zeit. Die Bedingung zum Reaktivieren einer Sendestation in dieser Ebene 3 ist Aktivität eines Endgerätes, welches die Technologie der abschaltbaren Serviceebene 3 unterstützt, und in der Defaultebene 1 oder Lastebene 2 im Versorgungsbereich der einzuschaltenden Sendestation der Serviceebene 3 eingebucht ist.

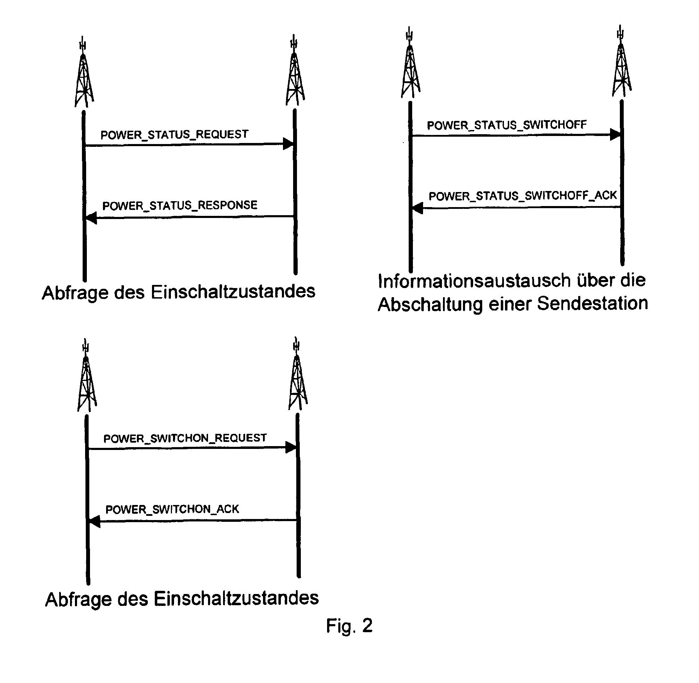

In Fig. 2 sind Kommunikationsprotokolle zwischen einer ersten Sendestation der Standardebene 1, die eine Kontrolleinheit aufweist und einer zweiten Sendestation einer zweiten 2 oder weiteren Ebene 3, dargestellt.

Zur Reaktivierung von einzelnen Sendestationen in der Lastebene 2 oder Serviceebene 3 ist es notwendig, die betroffenen Sendestationen darüber zu informieren, dass ein Kriterium zur Wiedereinschaltung in der Defaultebene 1 bzw. in der Lastebene 2 erreicht ist.

Dabei ist zu beachten, dass das Kriterium zur Einschaltung einer Sendestation in der Lastebene 2 nur in der Defaultebene 1 eintreten kann. Das Kriterium zur Einschaltung einer Sendestation in der Serviceebene 3 kann in der Defaultebene 1 und Lastebene 2 eintreten.

Weiterhin ist es notwendig, dass die Sendestationen in der Defaultebene 1 den Einschaltzustand der Sendestationen in der Serviceebene 3 und Lastebene 2 verwalten. Sendestationen der Lastebene 2 müssen den Einschaltzustand von Sendestationen der Serviceebene 3 verwalten. Dies ist notwendig, damit diese Sendestationen bei Erreichen eines Einschalttriggers, d.h. bei Erreichen der Einschaltbedingung, entsprechende Kommandos an die einzuschaltenden Sendestationen generieren. Dabei ist zu beachten, dass lediglich die Zustände von Sendestationen zu verwalten sind, welche den gleichen Versorgungsbereich haben.

Ein Protokoll zwischen den Sendestationen ist notwendig, um Änderungen des Einschaltzustandes den entsprechenden Sendestationen mitzuteilen. Weiterhin unterstützt das Protokoll ein Kommando zur Einschaltung der Sendestation für den Fall, dass die entsprechende Triggerbedingung erreicht ist. Weiterhin soll das Protokoll Kommandos unterstützen, um den Einschaltstatus einzelner Sendestationen (NodeB) abzufragen.

Als Basis für ein derartiges Protokol kann RIM (RAN Information Management) verwendet werden, welches in 3GPP TS 48.018: "General Packet Radio Service (GPRS); BSS GPRS Protocol (BSSGP)" definiert ist.

Basierend auf RIM erfolgt eine zusätzliche Applikation Power Saving mit den in Fig. 2 dargestellten Kommandos:
- POWER STATUS REQUEST fragt den Einschaltzustand einer Sendestation ab.
- POWER STATUS RESPONSE enthält den aktuellen Einschaltzustand einer Sendestation als Rückmeldung.
- POWER SWITCHOFF gibt an, dass die Triggerbedingung zum Abschalten einer Sendestation erreicht ist und die Sendestation abschaltet.
- POWER SWITCHOFF ACK bestätigt den Empfang einer POWER SWITCHOFF Nachricht.
- POWER SWITCHON REQUEST erfordert die Reaktivierung einer Sendestation.
- POWER SWITCHON ACK enthält die Angabe, dass eine Sendestation erfolgreich eingeschaltet wurde.

## Patentansprüche

1. Verfahren zum Betrieb eines Mobilfunknetzes, welches zwei oder mehr Versorgungsebenen (1, 2, 3) aufweist, die sich überlagern und jeweils durch eine Mehrzahl von Sendestationen gebildet sind, wobei eine erste Versorgungsebene (1) als Standardebene (1) definiert ist, die die Verfügbarkeit des Mobilfunknetzes gewährleistet, und eine zweite oder weitere Versorgungsebene (3) einen anderen Dienst bereitstellt und einer anderen Technologie angehört als die Standardebene (1), wobei eine Abschaltung dieser zweiten oder weiteren Versorgungsebene (3) zumindest teilweise und/oder temporär erfolgt, wenn der von dieser Ebene (3) bereitgestellte Dienst nicht verlangt wird oder über eine festlegbare Zeitspanne nicht verlangt wurde **dadurch gekennzeichnet, dass** eine abgeschaltete Sendestation der zweiten oder weiteren Versorgungsebene (3) bereits dann reaktiviert wird, wenn mindestens ein Endgerät, welches diese Technologie unterstützt, im Versorgungsbereich der abgeschalteten Sendestation aktiv wird.

2. Verfahren nach Anspruch 1, **dadurch gekennzeichnet, dass** eine Überwachung der Last in dem Mobilfunknetz erfolgt und eine Abschaltung der zweiten Versorgungsebene (3) oder einzelner Sendestationen der zweiten Versorgungsebene (3) bei Unterschreitung einer festlegbaren Lastuntergrenze erfolgt.

3. Verfahren nach Anspruch 1 oder 2, **dadurch gekennzeichnet, dass** eine Lastüberwachung einer jeden Sendestation der zweiten und/ oder weiteren Versorgungsebene (3) erfolgt.

4. Verfahren nach Anspruch 1, 2 oder 3, **dadurch gekennzeichnet, dass** eine temporäre Abschaltung einzelner Sendestationen der zweiten und/ oder weiteren Versorgungsebene (3) erfolgt.

5. Verfahren nach einem der vorherigen Ansprüche, **dadurch gekennzeichnet, dass** eine Abschaltung einer Sendestation der zweiten und/ oder weiteren Versorgungsebene (3) durch eine stetige Absenkung der Ausgangssendeleistung bis zu Null erfolgt.

6. Verfahren nach einem der vorherigen Ansprüche, **dadurch gekennzeichnet, dass** der Schaltzustand von Sendestationen der zweiten (3) und/oder einer weiteren Versorgungsebene (3) oder von einzelnen Sendestationen der zweiten (3) und/oder einer weiteren Versorgungsebene (3) von einer Kontrolleinheit überwacht wird, insbesondere dass die Standardebene (1) derartige Kontrolleinheiten aufweist.

7. Verfahren nach einem der vorherigen Ansprüche, **dadurch gekennzeichnet, dass** eine Einschaltung von Sendestationen einer zweiten (3) und/oder einer weiteren Versorgungsebene (3) bei Abruf von besonderen durch diese Sendestationen angebotenen Diensten in dem Mobilfunknetz erfolgt.

8. Verfahren nach einem der vorherigen Ansprüche, **dadurch gekennzeichnet, dass** mittels eines Protokolls der aktuelle Schaltzustand einer Sendestation der zweiten und/ oder weiteren Versorgungsebene (3) an eine Kontrolleinheit übermittelt wird, wenn eine Anfrage und/oder Schaltanweisung einer Kontrolleinheit empfangen wurde und/oder wenn der Schaltzustand der Sendestation nach Erhalt einer Schaltanweisung geändert wurde.

## Claims

1. Method for operating a mobile radio network that has two or more service levels (1, 2, 3) which overlap and each of which is composed of a plurality of transmitting stations, wherein a first service level (1) is defined as the standard level (1) that guarantees the availability of the mobile radio network, and a second or further service level (3) provides a different service and belongs to a different technology than the standard level (1), wherein a deactivation of this second or further service level (3) takes place at least partially and/or temporarily when the service provided by this level (3) is not requested or has not been requested for a definable time period, **characterized in that** a deactivated transmitting station of the second or further service level (3) is reactivated as soon as at least one terminal that supports this technology becomes active in the service area of the deactivated transmitting station.

2. Method according to claim 1, **characterized in that** a monitoring of the load in the mobile radio network takes place and a deactivation of the second service level (3) or of individual transmitting stations of the second service level (3) takes place when a drop below a definable lower load threshold occurs.

3. Method according to claim 1 or 2, **characterized in that** a load monitoring takes place of each and every transmitting station of the second and/or further service level (3).

4. Method according to claim 1, 2, or 3, **characterized in that** a temporary deactivation takes place of individual transmitting stations of the second and/or further service level (3).

5. Method according to any one of the preceding claims, **characterized in that** a deactivation of a transmitting station of the second and/or further service level (3) takes place through a continuous reduction to zero of the transmit output power.

6. Method according to any one of the preceding claims, **characterized in that** the switching state of the transmitting stations of the second (3) and/or a further service level (3) or of individual transmitting stations of the second (3) and/or a further service level (3) is monitored by a monitoring unit, in particular **in that** the standard level (1) has such monitoring units.

7. Method according to any one of the preceding claims, **characterized in that** an activation of transmitting stations of the second (3) and/or a further service level (3) takes place when special services offered by these transmitting stations are accessed in the mobile radio network.

8. Method according to any one of the preceding claims, **characterized in that** the current switching state of a transmitting station of the second and/or further service level (3) is communicated to a monitoring unit by means of a protocol when an inquiry and/or switching instruction has been received from a monitoring unit and/or when the switching state of the transmitting station has been changed following reception of a switching instruction.

## Revendications

1. Procédé pour faire fonctionner un réseau de radiocommunication mobile comportant deux niveaux de couverture (1, 2, 3) ou plus, superposés les uns aux autres et chacun constitué par une pluralité de stations émettrices, un premier niveau de couverture (1) étant défini comme niveau standard (1) assurant la disponibilité du réseau de radiocommunication mobile, et un deuxième ou autre niveau de couverture (3) fournissant un autre service et appartenant à une autre technologie que celle du niveau standard (1), une déconnexion dudit deuxième ou autre niveau de couverture (3) s'effectuant au moins partiellement et/ou temporairement lorsque le service fourni par ledit niveau (3) n'est pas demandé ou n'est pas demandé pendant un laps de temps définissable, **caractérisé en ce qu'**une station émettrice déconnectée appartenant au deuxième ou autre niveau de couverture (3) est déjà réactivée dès lors qu'au moins un terminal supportant cette technologie est activé à l'intérieur de la zone de couverture de la station émettrice déconnectée.

2. Procédé selon la revendication 1, **caractérisé en ce qu'**une surveillance de la charge est réalisée à l'intérieur du réseau de radiocommunication mobile, et **en ce qu'**une déconnexion du deuxième niveau de couverture (3) ou des stations émettrices individuelles du deuxième niveau de couverture (3) est effectuée lorsque la charge est inférieure à une limite inférieure de charge définissable.

3. Procédé selon la revendication 1 ou 2, **caractérisé en ce qu'**une surveillance de charge est effectuée pour chacune des stations émettrices du deuxième et/ou autre niveau de couverture (3) .

4. Procédé selon la revendication 1, 2 ou 3, **caractérisé en ce qu'**une déconnexion temporaire des stations émettrices individuelles du deuxième et/ou autre niveau de couverture (3) est effectuée.

5. Procédé selon l'une des revendications précédentes, **caractérisé en ce qu'**une déconnexion d'une station émettrice du deuxième et/ou autre niveau de couverture (3) est effectuée moyennant un abaissement continu de la puissance d'émission de sortie jusqu'à zéro.

6. Procédé selon l'une des revendications précédentes, **caractérisé en ce que** l'état de commutation des stations émettrices du deuxième (3) et/ou d'un autre niveau de couverture (3) ou des stations émettrices individuelles du deuxième (3) et/ou d'un autre niveau de couverture (3) est surveillé par une unité de contrôle, notamment **en ce que** le niveau standard (1) présente de telles unités de contrôle.

7. Procédé selon l'une des revendications précédentes, **caractérisé en ce qu'**une connexion des stations émettrices d'un deuxième (3) et/ou d'un autre niveau (3) est effectuée lorsque des services particuliers, proposés par cette station émettrice dans le réseau de radiocommunication mobile, sont demandés.

8. Procédé selon l'une des revendications précédentes, **caractérisé en ce que** l'état de commutation en cours d'une station émettrice du deuxième et/ou autre niveau de couverture (3) est transmis à une unité de contrôle moyennant un protocole lorsque une demande et/ou instruction de commutation d'une unité de contrôle a été reçue et/ou lorsque l'état de commutation de la station émettrice a été changé après la réception d'une instruction de commutation.
